# FASCICULE DE BREVET EUROPEEN

(11) **EP 3 328 655 B1**
(45) Date de publication et mention de la délivrance du brevet: **01.06.2022**
(21) Numéro de dépôt: 16750659.1
(22) Date de dépôt: 26.07.2016
(51) Int. Cl.: B41M 3/00, B41J 3/407, B41J 11/42, G06K 15/02, G06K 5/00, H04N 1/387

(54) **DISPOSITIF ET PROCÉDÉ D'OPTIMISATION DE TRANSFORMATION PAR VOIE NUMÉRIQUE D'UN SUBSTRAT**
VORRICHTUNG UND VERFAHREN ZUR OPTIMIERUNG DER DIGITALEN TRANSFORMATION EINES SUBSTRATS
DEVICE AND METHOD FOR OPTIMISING THE DIGITAL TRANSFORMATION OF A SUBSTRATE

(30) Priorité: 31.07.2015 EP 15290198
(43) Date de publication de la demande: 06.06.2018
(73) Titulaire: MGI Digital Technology, 94260 Fresnes (FR)
(72) Inventeur: ABERGEL, Edmond, 75012 Paris (FR); PAVIOTTI, Leo, 91320 Wissous (FR); PONCET, Romain, 69003 Lyon (FR)
(74) Mandataire: King, Alex
(86) Numéro de dépôt international: PCT/EP2016/067763
(87) Numéro de publication internationale: WO 2017/021209

(56) Documents cités:
- WO-A1-2014/125391
- WO-A2-2009/047757
- JP-A- 2011 090 383
- US-A- 4 857 715
- US-A- 5 813 771
- US-A1- 2014 126 000

## Description

La présente invention concerne un dispositif de transformation par voie numérique d'un substrat, en particulier un dispositif d'optimisation d'impression numérique sur un substrat, de préférence sur un substrat prétraité.

La présente invention concerne également un procédé de transformation par voie numérique d'un substrat, en particulier un procédé d'optimisation d'impression numérique sur un substrat, de préférence sur un substrat prétraité.

Les problèmes de déformation de substrat et/ou de transport imparfait de substrat avant et/ou durant/pendant l'impression sont bien connus de l'homme de l'art. On citera à titre illustratif un décalage dans le sens de déplacement du substrat et/ou dans le sens perpendiculaire au sens de déplacement du substrat, et/ou un biais, et/ou un étirement, et/ou une contraction. Ces problèmes ont été également rencontrés par la Demanderesse, notamment lors de la mise au point de son procédé d'impression numérique par vernis (ou encre) de substrats préalablement imprimés. Afin de résoudre ces problèmes, des dispositifs de transport de substrat de plus en plus sophistiqués ont été développés par la Demanderesse. On citera à titre illustratif l'utilisation de nombreux systèmes mécaniques, capteurs et de caméras de plus en plus performantes qui engendrent une amélioration en matière de calage ; malheureusement ces réglages de plus en plus fins réduisent considérablement les capacités de production. On peut également trouver dans la littérature de nombreux dispositifs d'alignement du substrat permettant d'améliorer le transport du substrat. Un problème additionnel lié à l'utilisation de ces dispositifs sophistiqués de transport de substrat est qu'ils relèvent d'un domaine de très haute technicité qui requiert la présence quasi-permanente d'experts techniques lors de leur utilisation ce qui engendre des coûts de fonctionnement prohibitifs. De plus, malgré cette sophistication, la Demanderesse a constaté que les problèmes évoqués ci-dessus n'étaient pas encore résolus et qu'il existait donc un besoin en la matière. En effet, la Demanderesse a constaté la présence de décalages infimes de la disposition de l'encre (par exemple un vernis) déposée sélectivement au moyen d'une impression numérique sur des endroits prétraités d'un substrat (par exemple une image ou une partie d'image pré-imprimée) et ceci quel que soit le système de transport idéal et dit sans faille utilisé. On citera à titre illustratif un décalage transversal et/ou longitudinal de l'image, une transformation homothétique de l'image, etc. Comme ce problème additionnel peut provenir du prétraitement du substrat (par exemple le positionnement de l'image), il existe donc un besoin additionnel qui permette de le résoudre.

WO2009047757 revendique un système de surimpression sur un substrat comprenant une pluralité de marques de repérage et au moins une caractéristique pré-imprimée ; le système comprenant : un imageur pour capturer une image numérique dudit substrat avec lesdites marques de repérage ; une plate-forme d'impression sur laquelle réside le substrat en cours de surimpression ; un contrôleur connecté de manière opérationnelle au dit imageur et au mécanisme d'impression ; dans lequel ledit contrôleur est adapté pour déterminer et évaluer le déplacement de ladite caractéristique pré-imprimée sur la base de ladite image du substrat reçu à partir dudit imageur, et pour estimer une déviation compensatoire ou correctrice de corrélation à appliquer par voie électronique à l'image en surimpression. L'information relative à cette déviation compensatoire ou correctrice de corrélation contenue dans le contrôleur permet à ce dernier d'agir directement sur - et donc de commander - le mécanisme d'impression pour compenser cette déviation. Cette technique présente plusieurs inconvénients, à commencer par la présence obligatoire de marques de repérage positionnées à des endroits prédéterminés et d'au moins une caractéristique pré-imprimée sur le substrat. On citera également le fait que l'ensemble du substrat pré-imprimé doit être digitalisé avant de commencer l'étape de surimpression, ceci afin de transmettre les informations nécessaires au positionnement du mécanisme d'impression. <insérer page 2a>

La présente invention vise donc au moins à pallier à ces inconvénients majeurs de l'art antérieur.

Ce but est atteint par un procédé de transformation dans un dispositif de transformation par voie numérique d'un substrat, tel que revendiqué dans la revendication 1.

WO2014/125391 est similaire à WO2009047757 en termes de divulgation ; il revendique un procédé d'impression 3D métallique sur un substrat ayant une pluralité de marques d'enregistrement à des emplacements prédéterminés sur celui-ci qui a été préimprimé avec au moins une caractéristique, ladite caractéristique comprenant une zone métallique.

JP2011090383 (A) fournit un appareil d'impression, un programme d'impression et un procédé d'impression pour améliorer la qualité d'image lors de la surimpression.

US2014126000 (A1) concerne un procédé de détermination des caractéristiques d'une imprimante, le procédé comprenant les étapes de réception de données d'impression, de définition d'emplacements de points à imprimer sur un support d'impression, de détermination à partir des emplacements de points une mesure de fréquence de points reflétant le nombre de points à imprimer sur au moins une partie du support d'impression, formant une image de référence simulée des données d'impression comprenant des points simulés correspondant aux emplacements des points dans les données d'impression, déterminant une taille des points simulés dans l'image de référence, cette taille étant inversement liée à la mesure de la fréquence des points, impression des données d'impression sur le support d'impression à l'aide de l'appareil de formation d'image pour former une image imprimée, et détermination des caractéristiques de l'appareil de formation d'image en comparant l'image imprimée et l'image de référence simulée.

US4857715 (A) concerne une forme numérisable pour un appareil de numérisation de marques optiques sous la forme d'une feuille de papier généralement rectangulaire ou d'un matériau similaire ayant une piste de chronométrage préimprimée le long d'un bord et une pluralité de marques d'assurance qualité préimprimées qui est imprimée par une imprimante laser avec des questions personnalisées et une réponse correspondante dans des bulles pour créer un formulaire d'enquête.

US5813771 (A) décrit un procédé pour calibrer une imprimante et/ou un scanner afin que des informations puissent être imprimées à un emplacement souhaité par rapport à une feuille, le procédé comprenant: le stockage d'un premier ensemble de marquages sous forme d'une première image sous forme numérique; imprimer, à l'aide d'une imprimante à calibrer, la première image sur une feuille pour former une feuille imprimée; numériser la feuille imprimée pour générer une seconde image stockée sous forme numérique; comparer la première image et la deuxième image, ou une image dérivée de la deuxième image, pour déterminer une première transformation qui mappe le premier ensemble de marquages dans la deuxième image, ou l'image dérivée de la deuxième image, sur le premier ensemble de marquages sur la première image; stocker les paramètres de la première transformation pour une utilisation ultérieure en appliquant la première transformation aux informations à imprimer à l'emplacement souhaité. En utilisant cette méthode, les transformations de biais associées à une imprimante et/ou un scanner peuvent être mesurées avec précision et stockées pour une utilisation future dans l'impression. Le procédé trouve une application particulière dans un système permettant de remplir des formulaires préimprimés.

Parmi les impressions préférées selon la présente invention, nous citerons à titre purement illustratif l'impression d'encres et/ou de vernis. A titre purement illustratif et non restrictif, ces encres/vernis pourront être fonctionnelles, par exemple de couleur, sécuritaire, conductrice et/ou luminescente.

Selon certains modes de réalisation de la présente invention, un prétraitement du substrat est effectué dans un dispositif de prétraitement qui est, de préférence, différent du dispositif de transformation.

Selon certains modes de réalisation de la présente invention, le dispositif de transformation comprend également un poste de transport du substrat. A titre illustratif, le poste de transport permet à la fois de déplacer le substrat depuis l'entrée du dispositif de transformation jusqu'à la sortie du dispositif de transformation.

A titre illustratif, le poste de transport permet à la fois de déplacer le substrat au travers du dispositif de prétraitement et ensuite au travers du dispositif de transformation. Selon certains modes de réalisation de la présente invention, le dispositif de transformation comprend également
- un magasin d'entrée (pour le stockage des substrats avant transformation), et/ou
- un magasin de sortie (pour le stockage des substrats après transformation), et/ou
- un moyen informatique de gestion des opérations sur chacun des postes de travail, et/ou
- un moyen de déplacement du substrat entre les différents postes de travail, et/ou
- un moyen de préhension et/ou de transfert du substrat du magasin d'entrée vers le magasin de sortie, et/ou
- un poste de transformation, par exemple un poste d'impression composé à titre illustratif d'au moins une buse pilotée par le poste de commande, et alimentée par un réservoir contenant du produit à projeter sur le substrat, et/ou
- un poste de séchage comportant par exemple un four de séchage à infrarouge et/ou à proche-infrarouge et/ou à courant d'air chauffé, et/ou un séchage à lampe UV et/ou à LED UV et/ou un procédé photonique (par exemple un procédé photonique utilisant des lampes-flash fournissant des impulsions lumineuses à large spectre (ajustables en permanence), de plusieurs mégawatts pendant quelques microsecondes).

Selon certains modes de réalisation de la présente invention, lorsqu'une matière A a été utilisée pour le prétraitement du substrat, une matière différente B est alors utilisée pour la transformation du substrat ; ainsi, à titre purement illustratif et non limitatif, la matière A peut être une encre et/ou un vernis et la matière B peut être une encre différente de A et/ou un vernis différent de A.

Selon certains modes de réalisation de la présente invention, le poste de commande est un moyen informatique, par exemple un poste informatique. La caractéristique de ce poste de commande selon la présente invention est donc qu'il peut enregistrer les fichiers numériques FN1, FN2 et FN3 et fournir un fichier FN3-CORR grâce au moyen de correction que le poste de commande renferme, le dit fichier FN3-CORR remplaçant le fichier FN3 et étant utilisé par le poste de commande pour effectuer la transformation.

Selon certains modes de réalisation de la présente invention, le poste de commande comprend une unité de calcul/traitement parallélisable ; la Demanderesse a effectivement découvert que l'utilisation d'unité(s) de calcul/traitement parallélisable permettait d'améliorer les résultats de son procédé de transformation. A titre illustratif, cette unité de calcul/traitement parallélisable peut être un GPGPU (ou plus communément appelé carte graphique) et/ou un FPGA.

Selon certains modes de réalisation de la présente invention, le poste de commande comprend une unité de calcul/traitement séquentielle. A tire illustratif et non limitatif, cette unité de calcul/traitement séquentielle peut être un ordinateur quantique.

Selon une autre particularité, le poste de commande peut également avantageusement collecter d'autres informations parmi lesquelles sont sélectionnées à titre purement illustratif, les informations des différents capteurs du dispositif de transformation ; les capteurs donnent par exemple, des informations de positions des substrats, des informations de vitesses de déplacement des substrats, des informations de configurations des substrats, des informations relatives aux moyens de déplacement des substrats, des informations relatives aux moyens de préhension des substrats, et/ou des informations de validation suite à une opération correctement effectuée ou non.

Selon une autre particularité, le poste de commande peut également avantageusement commander d'autres postes de travail parmi lesquels sont sélectionnés à titre purement illustratif, des cartes électroniques et/ou des automates, un poste d'impression comprenant par exemple une pluralité de têtes d'impression à jets d'encre contrôlées par les moyens informatiques, un poste de séchage, un poste de transport des substrats, un poste de découpe de substrat et/ou un poste d'analyse du substrat et/ou une combinaison de deux et/ou de plusieurs des dits postes précités.

Les substrats selon la présente invention peuvent être de nature, de forme, d'épaisseur et de dimension variables. A titre illustratif et non limitatif, on citera des feuilles, des bobines, des cartes, des circuits imprimés, et/ou tout autre objet à 2 ou à 3 dimensions, par exemples des bouteilles, des cubes, des parallélépipèdes rectangles, etc. En matière de format, et de façon non limitative et purement illustrative, on citera un format dont les côtés sont de l'ordre du centimètre, par exemple un format type A10, à titre d'exemple plus précis un format type carte de crédit ; jusqu'au format dont les côtés sont de l'ordre de plusieurs mètres, par exemple un format type A0 ou un format de 2 x 2 mètres ; jusqu'au format de type bobine dont la longueur peut être de plusieurs mètres, dizaines de mètres, centaines de mètres, même de l'ordre de kilomètres.

Le substrat peut être sélectionné parmi un grand nombre de matières et ne pas être considéré comme limité aux matières fréquemment utilisés dans les dispositifs standards d'impression et/ou de personnalisation tels que les substrats papier, carton et plastique. On citera à titre d'exemples non limitatifs des substrats rigides et/ou flexibles. On citera également à titre d'exemples non limitatifs le métal, le papier, le textile, le tissu, le non-tissé, le plastique, par exemple une résine copolymère méthacrylique, du polyester, du polycarbonate, du polyéthylène, du polypropylène, du polystyrène et/ou du chlorure de polyvinyle, ou même les matériaux de type cellulosique tels que, par exemple, le bois, le contreplaqué, ou les matériaux cristallins tels que le verre ou les céramiques, par exemple. L'invention s'applique donc également à toute combinaison de ces matériaux, comme par exemple les matériaux complexes comprenant un ou plusieurs de ces composants comme par exemple les briques de lait.

Selon certains modes préférés de réalisation de la présente invention, le substrat est donc prétraité. A titre purement illustratif et non restrictif, le prétraitement peut être sélectionné parmi la liste suivante : une impression (par exemple électrophotographique, offset, jet d'encre, etc.) d'une image et/ou d'un texte, un collage d'une image et/ou d'un texte, un pelliculage (souvent appelé laminage), une prédécoupe (par exemple au laser), une perforation, et/ou deux ou plusieurs des dits prétraitements en combinaison.

Selon certains modes de réalisation de la présente invention, le même substrat pourra avantageusement passer plus d'une fois (à titre illustratif et non limitatif de 2 à 50 fois) sous le dispositif X et le poste de transformation en répétant ainsi le procédé selon la présente invention. A titre illustratif, cette technique de multi passes permet par exemple d'améliorer la qualité de la transformation (par exemple de l'impression) en n'utilisant qu'un seul poste de transformation ; ainsi, à chaque passage, on utilise de préférence un fichier FN3-CORR qui est différent ou identique au fichier FN3-CORR précédent ; cette technique se distingue donc des techniques de surimpression.

Les termes « avant » et « arrière » sont utilisés dans la présente invention pour indiquer une relation temporelle. A titre illustratif, avant sera synonyme de « antérieurement à » et arrière sera synonyme de « postérieurement à ».

Les termes « amont » et « aval » sont utilisés dans la présente invention pour indiquer une relation spatiale. A titre illustratif, amont sera synonyme de « antérieurement à » et aval sera synonyme de « postérieurement à ». Ces termes seront bien entendu interprétés selon le contexte respectif dans lequel ils seront utilisés.

La présente invention comprend donc une étape d'enregistrement dans un moyen de commande d'un fichier numérique source FN1 représentatif du substrat. Ce fichier numérique source FN1 peut à titre d'exemple être le fichier numérique qui a été utilisé pour commander l'étape de prétraitement du substrat - c'est généralement le cas lorsque c'est le même professionnel qui effectue les étapes de prétraitement et de transformation ou lorsque le premier professionnel transmet au deuxième professionnel les données numériques correspondantes au substrat (prétraité). Ce fichier numérique source FN1 peut également être un fichier numérique obtenu par une étape additionnelle optionnelle comprenant
- une étape d'analyse du substrat (de préférence du substrat prétraité) au moyen d'un dispositif W pour lui attribuer des valeurs numériques, la dite étape ayant lieu avant l'étape d'analyse du substrat au moyen d'un dispositif X, et
- une étape d'enregistrement dans le moyen de commande d'un fichier numérique FN1 représentatif du substrat analysé au moyen du dispositif W et de l'acquisition de données numériques correspondantes.

Selon certains modes de réalisation de la présente invention, le dispositif W se situe en amont du poste de transport du substrat (de préférence prétraité) qui est situé dans le dispositif de transformation.

Le dispositif W peut également se situer à titre illustratif dans le dispositif de prétraitement, entre le dispositif de prétraitement et le dispositif de transformation, ou encore dans le dispositif de transformation lui-même. Bien que le dit dispositif W soit habituellement situé en amont du dispositif X, on pourrait également utiliser le dispositif X en tant que dispositif W. A titre illustratif, on prend un substrat (de préférence prétraité) sans défaut qu'on amène dans le dispositif W de manière optimale pour l'analyser et en extraire le fichier source FN1 qui sera donc utilisé comme fichier théorique parfait. Cette étape d'analyse additionnelle peut avantageusement s'effectuer grâce à un contrôle minutieux d'un opérateur qui sélectionne le substrat (de préférence prétraité) sans défaut qu'il identifie comme étant parfait et qui l'analyse de manière parfaite en veillant à minimiser tout ce qui pourrait affecter l'obtention du fichier source FN1 parfait ; à titre illustratif, l'opérateur veillera à ce que le transport vers et/ou le positionnement du substrat dans le dispositif W soit optimal pour effectuer son analyse (par exemple, en contrôlant la vitesse de transport ou/et l'inclinaison/angle du substrat).

La présente invention pourra s'avérer particulièrement utile lorsque le nombre de substrats identiques à transformer est élevé. Ainsi, et ceci constitue un mode de réalisation particulier de la présente invention, le ratio entre le nombre de fichiers FN2 et le nombre de fichiers FN1 utilisés est supérieur à 10, de préférence supérieur à 100, par exemple supérieur à 500, à 1000, même supérieur à 10000. En général, la comparaison des différences entre le fichier FN1 et le fichier FN2 peut s'effectuer avantageusement entre un seul fichier FN1 source représentatif d'un nombre « N » de substrats (de préférence prétraités) identiques à transformer et le même nombre « N » de fichiers FN2 ; optionnellement, on peut aussi utiliser « n » fois le même fichier FN2 pour un nombre n de substrats consécutifs à transformer, « n » étant un nombre compris entre 1 et N, ou entre 1 et N/2 (pour tout N > 2), de préférence entre 1 et N/10 (pour tout N > 10), par exemple entre 1 et N/100 (pour tout N > 100) - en faisant de la sorte, on diminue le nombre de fichiers FN2 mais on diminue aussi l'efficacité de la présente invention ; lorsque le calcul de « n » fournit un nombre qui n'est pas un entier, il sera arrondi à l'entier supérieur ou inférieur. Un mode de réalisation particulier, lorsque le fichier source FN1 provient du dispositif W, consiste à utiliser un nombre « q » de fichiers FN1 pour le nombre « N » de substrats (de préférence prétraités) identiques à transformer ; à titre illustratif, lorsqu'il faut transformer un très grand nombre « Q » de substrats supposés être identiques, il peut arriver que ces substrats ne soient plus tout à fait identiques, et qu'il convienne donc d'établir « q » fichiers FN1 ce qui permet de comparer chaque fichier FN1 à un ensemble « Q/q » de fichiers FN2 ; par exemple, lorsque Q est égal à 500, on pourrait établir à intervalles réguliers 10 fichiers FN1 tous les 50 substrats. A titre illustratif, pour tout Q > 100, q doit être
- plus grand ou égal à 1, à 2, à 5 ou même à 10, et/ou
- plus petit ou égal à Q, à Q/2, à Q/5, ou même à Q/10.

La présente invention pourra également s'avérer particulièrement utile lorsque les substrats successifs sont différents et/ou lorsque le substrat est une bobine dont le prétraitement est différent. A titre illustratif, nous citerons la technique de personnalisation, par exemple celle des étiquettes de vin et/ou d'autres boissons dont au moins une partie du prétraitement diffère le long de la bobine. On pourrait dans ce cas précis - soit disposer d'un seul fichier FN1 global fourni par le professionnel responsable du prétraitement, le dit fichier FN1 étant représentatif de l'ensemble des substrats et/ou de la bobine, - soit disposer de plusieurs fichiers FN1 fournis par le professionnel responsable du prétraitement, les dits fichiers FN1 étant chacun représentatif d'une partie seulement de l'ensemble des substrats et/ou d'une partie seulement de la bobine.

Selon certains modes de réalisation de la présente invention, le mouvement relatif du substrat par rapport au dispositif de transformation pourra se faire par toute méthode appropriée. A titre illustratif, le substrat sera soit déplacé au moyen d'un poste de transport au travers du poste de transformation, soit le substrat sera immobile et ce sera le poste de transformation qui sera mobile, ou encore le substrat et le poste de transformation seront tous les deux mobiles. Il en sera de même pour le mouvement relatif du substrat par rapport au dispositif X (et/ou W). A titre illustratif, le substrat sera soit déplacé au moyen d'un poste de transport au travers du dispositif X (et/ou W), soit le substrat sera immobile et ce sera le dispositif X (et/ou W) qui sera mobile, ou encore le substrat et le dispositif X (et/ou W) seront tous les deux mobiles.

Ainsi, selon la présente invention, le dispositif X se situe dans le dispositif de transformation par exemple en amont du poste de transformation ou en aval du poste de transformation en fonction du déplacement du substrat.

Tout dispositif d'analyse et d'acquisition de données numériques représentatives du substrat pourra être utilisé avantageusement comme dispositif W ou X. Selon certains modes de réalisation de la présente invention, les dispositifs W et X sont des systèmes d'acquisition (par exemple un scanneur, un scanneur à plat, un scanneur à défilement, et/ou un scanneur à tambour) et/ou des caméras. Dans un mode de réalisation particulier de la présente invention, la résolution du dispositif X est identique à la résolution du dispositif W, ladite résolution étant habituellement exprimée en « points par pouce » ou « pixel par pouce».

La présente invention comprend donc - avant l'étape de transformation - une étape d'analyse du substrat au moyen d'un dispositif X pour lui attribuer des valeurs numériques, le dit dispositif X étant situé dans le dispositif de transformation , et une étape d'enregistrement dans le moyen de commande d'un fichier numérique FN2 représentatif du substrat analysé au moyen du dispositif X et de l'acquisition de données numériques correspondantes.

Les différences entre le fichier FN1 et le fichier FN2 sont donc critiques dans l'esprit de la présente invention. La nature de ces différences, comme expliqué ci-après dans la description de l'algorithme, peut également s'avérer critique. Bien que la présente invention puisse s'avérer également utile pour corriger les défauts du traitement préalable du substrat, l'objectif premier de la présente invention consiste à faire en sorte que la transformation du substrat par voie numérique (par exemple, l'impression numérique) soit optimisée, par exemple que le positionnement de la dite transformation sur le substrat suivent les déformations locales ou globales du substrat et/ou de son prétraitement.

En théorie, les informations du fichier numérique FN3 contenu dans le moyen de commande du poste de transformation suffisent pour effectuer la transformation du substrat. En pratique, on constate que le substrat théorique n'est pas parfait, que ce soit au niveau du premier traitement qui peut faire apparaitre par exemple de manière très locale des déplacements infimes de certains éléments du dit premier traitement, ou que ce soit au niveau du substrat en tant que tel, par exemple si le substrat a subi des déformations locales que celles-ci soient dues soit à la nature et/ou à la qualité du substrat, soit au positionnement imparfait du substrat dans le poste de transport. La présente invention permet donc de pallier à tous ces inconvénients en agissant directement sur le fichier numérique de transformation (par exemple le fichier numérique d'impression « FN3 »). Ceci représente déjà un avantage considérable de la présente invention par rapport aux techniques décrites dans la littérature. Un avantage additionnel de la présente invention consiste en la possibilité de commencer à réaliser la transformation au moyen du fichier FN3-CORR par bande avant la réception de l'intégralité de l'information contenue dans le fichier FN2. Cela permet entre autres de commencer à réaliser le traitement du substrat avant qu'il ne soit entièrement numérisé par le dispositif X. La gestion des données par bande de FN2 (gestion par flux continu de données) apport un avantage considérable sur la distance entre le dispositif X et le procédé de transformation du substrat et donc sur la dimension du dispositif de transformation. Cela implique également la possibilité de pouvoir réaliser le traitement de substrat de très grandes tailles (plusieurs mètres voire centaines de mètres pour des substrats en bobines).

Le terme fichier numérique est bien connu de l'homme de l'art pour qui ce terme est équivalent au terme fichier informatique (parfois également appelé document numérique). Techniquement, un fichier numérique est bien souvent une information numérique constituée d'une séquence d'octets, c'est-à-dire d'une séquence de nombres, permettant des usages divers. A titre illustratif, un fichier numérique est constitué de 0 et de 1 et est habituellement défini comme une suite de données structurée (souvent sous la forme d'une liste d'enregistrements suivant un même format), portant un nom et codé sur un support. En général, on dit numérique une information qui se présente sous forme de nombres associés à une indication de la grandeur à laquelle ils s'appliquent, permettant les calculs, les statistiques, la vérification des modèles mathématiques. Au sens commun, un fichier informatique est une collection d'informations numériques réunies sous un même nom, enregistrées sur un support de stockage permanent, appelé mémoire de masse, tel que par exemple une mémoire flash, une clef USB, une mémoire RAM (DRAM / SRAM / DPRAM / VRAM / eDRAM / 1T-SRAM / etc...), une carte mémoire (CF / MMC / MS / SD (miniSD / microSD) / xD / XQD / etc...) / SmartMedia / Disque dur / Disque optique (CD / DVD / Blu-ray / etc...) et/ou une bande magnétique, et manipulées comme une unité.

L'invention, avec ses caractéristiques et avantages, ressortira plus clairement à la lecture de la description ci-après, faite en référence aux deux figures annexées.

La figure 1 illustre un algorithme de fonctionnement du procédé de transformation d'un substrat par voie numérique selon la présente invention.

La figure 2 illustre un dispositif de transformation conforme à la présente invention.

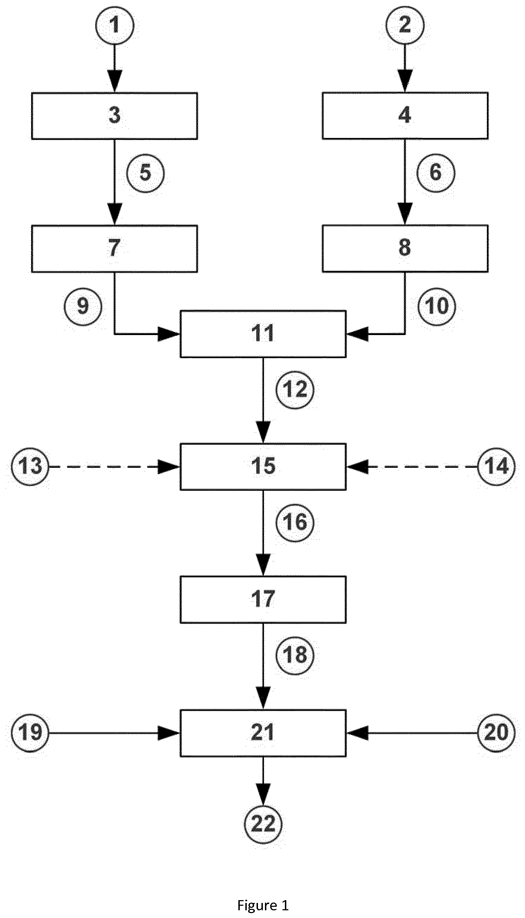

Donc, de manière illustrative et non limitative, la figure 1 illustre un algorithme de fonctionnement du procédé de transformation par voie numérique d'un substrat selon la présente invention. De nombreuses étapes relatives à cet algorithme sont optionnelles ; ces étapes et/ou caractéristiques optionnelles peuvent donc avantageusement être utilisées de manière individuelle ou de manière combinée entre deux ou plusieurs des dites options, selon des modes de réalisation particuliers de la présente invention.

La numérotation utilisée dans la description qui suit correspond à la numérotation des éléments repris dans la figure 1.

On retrouve en 1, le fichier numérique source FN1 représentatif du substrat. Comme déjà indiqué, ce fichier numérique source FN1 peut à titre d'exemple être le fichier numérique qui a été utilisé pour commander l'étape de prétraitement du substrat et/ou un fichier numérique obtenu par une étape additionnelle optionnelle comprenant
- une étape d'analyse du substrat (de préférence prétraité) au moyen d'un dispositif W pour lui attribuer des valeurs numériques, la dite étape intervenant avant l'étape d'analyse du substrat par le dispositif X, et
- une étape d'enregistrement dans le moyen de commande d'un fichier numérique FN1 représentatif du substrat analysé au moyen du dispositif W et de l'acquisition de données numériques correspondantes.

On retrouve en 2, le fichier numérique FN2 représentatif du substrat analysé au moyen du dispositif X et de l'acquisition de données numériques correspondantes.

L'étape 3 est une étape optionnelle de traitement du fichier FN1. A titre illustratif et non limitatif, cette étape peut avoir pour but la modification de la résolution du fichier FN1 et/ou la modification de l'espace colorimétrique du fichier FN1 pour le faire correspondre au plus proche de la réalité de la couleur du substrat prétraité. A titre d'exemple, si le fichier numérique source FN1 est utilisé en prétraitement pour une impression couleur au moyen d'une imprimante couleur possédant son propre espace colorimétrique, cette étape 3 permettra de transformer l'espace colorimétrique du fichier FN1 vers l'espace colorimétrique de l'imprimante couleur. A l'issue de cette étape optionnelle, le fichier numérique FN1 devient donc un fichier numérique traité FN1' [visualisable en position 5 sur la figure 1que nous continuerons d'appeler FN1 dans la suite de la description de manière à en faciliter la compréhension.

Selon certains modes de réalisation de la présente invention, dans le cas de figure déjà décrit où le fichier numérique FN1 est obtenu au moyen du dispositif W (le dispositif d'analyse et d'acquisition de données numériques décrit ci-avant dans la description), une étape optionnelle additionnelle de traitement du fichier FN1 est également envisageable. Cette étape (non représentée dans la figure) a pour but la modification du fichier FN1 en fonction des différentes caractéristiques et/ou défauts du dispositif W. A titre d'exemples, il peut s'agir de la position du dispositif W, son angle par rapport au défilement du substrat, le bruit qu'il génère, les défauts de résolution due à la distance focale, etc.... A l'issue de cette étape optionnelle, le fichier numérique FN1 devient donc un fichier numérique traité FN1" que nous continuerons d'appeler FN1 dans la suite de la description de manière à en faciliter la compréhension.

L'étape 4 est une étape optionnelle de traitement du fichier FN2. A titre illustratif et non limitatif, cette étape a pour but la modification du fichier FN2 en fonction des différentes caractéristiques et/ou défauts du dispositif X (le dispositif d'analyse et d'acquisition de données numériques décrit ci-avant dans la description). A titre d'exemples, il peut s'agir de la position du dispositif X, son angle par rapport au défilement du substrat, le bruit qu'il génère, les défauts de résolution due à la distance focale, etc.... A l'issue de cette étape optionnelle, le fichier numérique FN2 devient donc un fichier numérique traité FN2' [visualisable en position 6 sur la figure] que nous continuerons d'appeler FN2 dans la suite de la description de manière à en faciliter la compréhension.

L'étape 7 constitue un mode de réalisation particulier de la présente invention qui décrit un mode de découpage du fichier FN1 en portions, le dit découpage permettant ultérieurement d'optimiser la comparaison entre le fichier FN1 et le fichier FN2. A titre illustratif, cette étape comprend le découpage en portions du fichier FN1 et le filtrage des portions en fonction de leur intérêt ; cette étape divise donc FN1 en petite portions (que nous appellerons «mailles » dans la suite de la description). L'algorithme du poste de commande permettra de calculer les variations de chacune de ces mailles entre FN1 et FN2. Le choix de la taille d'une maille peut être important car plus la maille est grande moins l'algorithme sera précis (car on calcule moins de transformation sur une même surface) et inversement. Une fois le découpage effectué, cette étape crée une liste de régions d'intérêts (« ROI ») ; la ROI définit une maille avec sa position en X et en Y (dans un repère cartésien, par exemple dans un système de coordonnées cartésiennes planaire qui pourrait également devenir tridimensionnel en lui rajoutant la coordonnée Z) dans le fichier numérique et contient également un descripteur qui permet d'identifier la dite maille. Il est également préférable que la maille ne soit pas trop petite car de trop petites mailles rendent plus difficile la création du descripteur d'identification de cette maille. Dans l'hypothèse où une maille ne permettrait pas de créer un descripteur robuste, alors aucune ROI ne lui sera attribuée et elle sera ignorée dans la suite du traitement. Un descripteur de maille peut être défini par exemple et de façon non limitative par des angles contenus dans cette maille, des bords, des variations de couleurs, etc... La robustesse d'un descripteur peut être définie par sa probabilité d'unicité et sa tolérance aux transformations comme par exemple et de façon non limitative à des transformations d'étirements, des transformations angulaires et/ou des transformations de couleurs. A l'issue de cette étape 7, le fichier FN1 a donc été découpé en une liste de ROI [visualisables en position 9 sur la figure].

L'étape 8 constitue un mode de réalisation particulier de la présente invention qui décrit un mode de découpage du fichier FN2 en portions (« mailles »), le dit découpage permettant ultérieurement d'optimiser la comparaison entre le fichier FN1 et le fichier FN2. Ce découpage en mailles peut être identique au découpage effectué à l'étape 7 et/ou les dimensions des mailles peuvent être supérieures ou inférieures aux dimensions des mailles découpées à l'étape 7. Cette dernière particularité peut permettre d'affiner la reconnaissance des mailles entre elles. L'étape 7 et l'étape 8 peuvent s'effectuer simultanément ou l'une avant l'autre.

L'étape 11 constitue un mode de réalisation particulier de la présente invention qui décrit l'étape de sélection des listes de couples de ROI. Cette étape permet de faire correspondre pour chaque ROI issu de FN1 un ROI issu de FN2 (ou l'inverse). La correspondance est définie par la similitude entre les descripteurs de couple de deux ROI, l'un provenant de FN1 et l'autre provenant de FN2 (ou l'inverse). Dans le cas particulier où un ROI de FN1 est très similaire à plusieurs ROI de FN2 (ou l'inverse), l'algorithme du poste de commande rejettera de préférence la maille correspondante car le taux d'erreurs sera considéré comme trop important. Dans un mode de réalisation particulier de la présente invention et afin d'augmenter les performances de l'algorithme, un ROI issu de FN1 ne sera comparé qu'aux ROI issus de FN2 (ou l'inverse) dans une zone appelée « zone de recherche ». La recherche par zone de recherche permet de réduire les temps de calcul mais évite également les incohérences éventuelles liées aux répétitions d'images. A l'issue de cette étape 11, on obtient donc une liste de couples de ROI [visualisables en position 12 sur la figure] qui se correspondent entre FN1 et FN2. Pour chaque couple de ROI, l'écart de leur positionnement (entre ROI-FN1 et ROI-FN2) identifie les différences (en X et en Y) entre FN1 et FN2.

Comme déjà évoqué dans la présente description, un avantage considérable de la présente invention consiste en ce qu'elle permet d'effectuer les étapes de découpage (maillage) et de correspondance de ROI sur des parties du substrat. Ainsi, et ceci constitue un mode de réalisation particulier de la présente invention, le découpage s'effectue dans des bandes transversales (par rapport à la direction de transport du substrat vers le poste de transformation) successives du substrat. Ce procédé permet de commencer la transformation du substrat par bandes transversales en fonction des bandes transversales du substrat déjà analysées conformément à la présente invention ; ainsi, à titre illustratif et non limitatif, on peut avantageusement commencer l'impression des premières bandes (situées en amont sur le substrat par rapport au déplacement relatif du substrat par rapport au poste de transformation) alors qu'une partie du dit substrat n'a pas encore été analysée au moyen du dispositif X.

Ainsi, selon un mode de réalisation particulier de la présente invention, les fichiers numérique FN1 et FN2 sont en fait constitués d'une multitude de fichiers numériques qui sont représentatifs de parties de substrat, les dites parties étant de préférence des bandes successives, de préférence des bandes transversales successives du dit substrat (c'est-à-dire des bandes perpendiculaires à l'axe longitudinal dans le plan du chemin de déplacement relatif du substrat par rapport au poste de transformation, par exemple dans le plan de transport du substrat). Selon un mode de réalisation particulier de la présente invention, ces bandes sont de dimensions égales (ou supérieures) en longueur à la largeur du substrat, et/ou de largeur supérieure à 0,01 cm, à 0,05 cm, à 0,1 cm, à 0,5 cm, à 1 cm, voire même supérieure à 5 cm, et/ou de largeur inférieure à 100 cm, à 60 cm, à 30 cm, voire même inférieure à 10 cm.

Selon un mode de réalisation particulier de la présente invention, lorsque l'invention est mise en œuvre par partie de substrat (par exemple des bandes transversales), la liste de couples de ROI [visualisables en position 12 sur la figure] qui correspondent entre FN1 et FN2 ne concernent donc qu'une partie du substrat. Selon un mode de réalisation particulier complémentaire de la présente invention, les positions 13 et 14 de la figure représentent des listes de couples de ROI qui correspondent entre FN1 et FN2 et qui concernent respectivement la partie précédente et la partie suivante du substrat.

A titre d'illustration, pour la constitution du fichier numérique FN2 représentatif de la bande « n » du substrat, le poste de commande utilise les résultats de l'analyse de la bande « n » effectuée par le dispositif X et de l'acquisition de données numériques correspondantes. Dans un mode d'exécution particulier de la présente invention, le poste informatique utilise également les résultats de l'analyse des bandes situées en amont (par rapport au déplacement relatif du substrat par rapport au poste de transformation) de la bande « n », par exemple les bandes « n-1 », « n-2 », « n-3 », etc.. effectuée par le dispositif X et de l'acquisition de données numériques correspondantes ; dans un mode d'exécution particulier de la présente invention, le poste informatique utilise également les résultats de l'analyse des bandes situées en aval (par rapport au déplacement relatif du substrat par rapport au poste de transformation) de la bande « n », par exemple les bandes « n+1 », « n+2 », « n+3 », etc.. effectuée par le dispositif X et de l'acquisition de données numériques correspondantes.

L'étape 15 constitue ainsi un mode de réalisation optionnel particulier de la présente invention qui décrit une étape d'interpolation des mailles manquantes. En effet, il arrive lors des étapes précédentes que certaines mailles n'aient pas pu trouver de correspondance entre FN1 et FN2. Cette étape a donc pour but d'interpoler la position d'une maille manquante en fonction de mailles connues. Dans le cas où FN2 définit une partie du substrat, cette étape peut prendre en compte l'analyse des parties précédentes du substrat mais également des parties ultérieures du substrat qui ont déjà été numérisées par le système d'acquisition afin d'améliorer la précision de l'interpolation. Ainsi, selon ce mode de réalisation particulier complémentaire de la présente invention, la position 16 de la figure représentent des listes de couples de ROI qui correspondent entre FN1 et FN2 et qui sont obtenus à l'issue de l'étape 15 ; à ce stade de l'algorithme et suite à l'interpolation selon l'étape 15, toutes les mailles manquantes de FN1 et FN2 ont été déterminées.

L'étape 17 est une étape optionnelle de traitement qui permet de tenir compte des variations des mailles. A titre illustratif, cette étape permet de corriger et de lisser des erreurs de détection ou d'interpolation de la position des mailles. On peut par exemple et de façon non limitative citer l'utilisation de courbes de Béziers, ou des filtres passe bas. A l'issue de cette étape optionnelle de lissage des variations de mailles, on obtient donc les couples de correspondance de positions de mailles entre FN1 et FN2 [visualisable en position 18 sur la figure].

Le fichier numérique FN3 de transformation (par exemple d'impression) est représenté en position 19 sur la figure.

Le fichier numérique FN3-CORR qui est fourni par le moyen de correction du fichier FN3 (qu'il remplace) et qui est utilisé par le poste de commande pour commander l'impression est représenté en position 22 sur la figure.

L'étape 21 constitue un mode de réalisation particulier de la présente invention qui décrit en fait à la fois l'étape de correction, par un moyen de correction faisant partie du moyen de commande, du fichier FN3 par les différences entre le fichier FN1 et le fichier FN2, et l'étape d'enregistrement dans le moyen de commande d'un fichier numérique FN3-CORR fourni par le moyen de correction du fichier FN3. Cette étape 21 permet de définir le nouveau fichier numérique (FN3-CORR) représentatif de la (partie de la) transformation à effectuer (par exemple de (la partie de) l'impression) en fonction des différences calculées lors des étapes 11/12 et/ou 15/16 et/ou 17/18.

La position 20 représente un mode optionnel de réalisation particulier de la présente invention qui consiste, à partir d'un fichier numérique vide et de taille suffisante pour pouvoir contenir l'ensemble des données numériques de transformation (et de préférence égale à la laize d'impression), en la reconstruction du fichier numérique FN3-CORR représentatif de la (partie de la) transformation à effectuer (par exemple de (la partie de) l'impression) en fonction de FN3 et des différences calculées lors des étapes 11/12 et/ou 15/16 et/ou 17/18. Cette étape copie les données du fichier numérique FN3 en leur appliquant les dites différences dans un fichier numérique vide et de taille suffisante pour pouvoir contenir l'ensemble des données (et de préférence égale à la laize d'impression).

Comme déjà évoqué dans la présente description, un avantage considérable de la présente invention consiste en ce qu'on ne doive pas rajouter de marques de repérage à des endroits prédéterminés sur le substrat. Toutefois, il est évident que le rajout des dites marques de repérage n'est pas interdit mais il représente bien évidemment une complexité additionnelle non préférée selon la présente invention puisqu'il alourdit inutilement les fichiers FN1 et FN2. Ainsi, selon un mode de réalisation particulier de la présente invention, le substrat ne comprend pas de marques de repérage à des endroits prédéterminés ; par exemple, le substrat ne comprend pas de marques de repérage.

La résolution des fichiers numériques individuels FN1 et FN2, et/ou FN3 et/ou FN3-CORR peut être identique ou non. En fait, lorsque la résolution de deux fichiers numériques est identique, cela permet de faire des comparaisons et/ou des corrections directement sur les dits fichiers sans devoir effectuer de traitement préalable. Lorsque la résolution des fichiers numériques n'est pas identique, on effectue en général un prétraitement des fichiers numériques de manière à ce que la résolution et donc la taille des fichiers sur lesquels la comparaison et/ou la correction est effectuée soit la même.

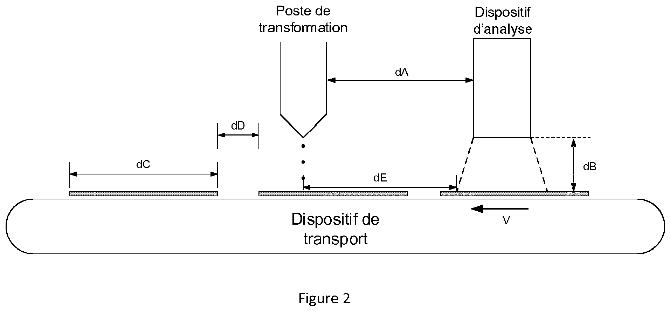

De manière illustrative et non limitative, la figure 2 illustre un dispositif de transformation conforme à la présente invention. On peut y apercevoir le poste de transformation (par exemple un système d'impression), le dispositif X (illustré par le « dispositif d'analyse », par exemple un scanneur) ainsi que le poste de transport (illustré par le « dispositif de transport », par exemple une courroie). Dans cet exemple de réalisation, le substrat de longueur dC est transporté dans le dispositif de transformation de droite à gauche, respectivement sous le dispositif d'analyse et sous le poste de transformation. La présente invention pourra avantageusement être utilisée pour tout type de substrat de longueur dC, que cette longueur dC soit très petite ou très grande; par exemple et de façon non limitative la longueur dC sera inférieure à 2200 mm. En particulier, le format du substrat pourra être sélectionné parmi les formats qui répondent à une normalisation internationale (ISO) et/ou nationale (DIN, AFNOR, ANSI, etc...). A titre illustratif, nous citerons les formats normés français et/ou les formats normés américains. La présente invention pourra également s'avérer très utile pour des substrats de type bobine ; dans ce cas particulier, la « longueur dC » pourra correspondre à la longueur de toute la bobine ou à la longueur (dans le sens de défilement de la bobine) de la partie de la bobine correspondante à la caractéristique de transformation (par exemple d'impression) qui peut être répétée sur la bobine.

Dans la figure 2, la distance dB correspond à la distance entre la partie supérieure du substrat et la partie inférieure du dispositif X (illustré par le « dispositif d'analyse »). Dans un mode de réalisation particulier, la distance dB est inférieure à 10 mètres, à 2 mètres, à 500 millimètres, de préférence inférieure à 300 millimètres, voire inférieure ou égale à 100 millimètres.

Dans la figure 2, la distance dA correspond à la distance entre le poste de transformation et le dispositif X (illustré par le « dispositif d'analyse »). Dans un mode de réalisation particulier, la distance dA est inférieure à 50 m, de préférence inférieure à 20 m, de préférence inférieure à 10 m, de préférence inférieure à 5 m.

Dans la figure 2, la distance dE correspond à la distance entre le point du substrat qui subit au temps « t » la transformation dans le poste de transformation (illustré par le «poste de transformation ») et le point amont de la zone d'analyse et d'acquisition au même temps « t » du dispositif X (illustré par le « dispositif d'analyse »). Dans un mode de réalisation particulier, la distance dE est supérieure ou égale à 0 mm, supérieure à 1 mm, supérieure à 50 mm, par exemple supérieure à 100 mm, supérieure à 250 mm, ou encore supérieure à 300 mm, ou encore supérieure à 500 mm, ou encore supérieure à 1000 mm, ou encore supérieure 10 000 mm. Dans un mode de réalisation particulier, la distance dE est inférieure à 100 m, inférieure à 50 m, ou encore inférieure à 20 m.

Dans la figure 2, la distance dD correspond à la distance entre deux substrats successifs. Dans un mode de réalisation particulier, la distance dD est supérieure à 1 mm, supérieure à 5 mm, à 20 mm, ou à 50 mm. Dans un mode de réalisation particulier, la distance dD est inférieure à 1000 mm, à 500 mm, ou à 200 mm. Pour un substrat bobine, cette distance peut être nulle.

Dans un mode de réalisation particulier de la présente invention, la vitesse relative du substrat (illustrée par le défilement du substrat et le symbole « v » dans la figure 2) par rapport au poste de transformation (illustré par le « poste de transformation ») et/ou par rapport au dispositif X (illustré par le « dispositif d'analyse ») est comprise entre 0,05 et 10 m/s, comprise entre 0,1 et 2 m/s, par exemple comprise entre 0,3 et 1,2 m/s ; la vitesse relative du substrat par rapport au poste de transformation et la vitesse relative du substrat par rapport au dispositif X peuvent être différentes ou identiques.

La présente demande décrit diverses caractéristiques techniques et avantages en référence à la figure et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Ainsi, selon un mode de réalisation particulier de la présente invention, il est possible de rajouter tout type de traitement optionnel et/ou additionnel du substrat en amont du dispositif X, entre le dispositif X et le poste de transformation et/ou en aval du poste de transformation.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de transformation dans un dispositif de transformation par voie numérique d'un substrat comprenant :
• une étape de transformation par voie numérique du substrat dans un poste de transformation du dispositif de transformation, le dit substrat étant déplacé au travers du poste de transformation au moyen d'un poste de transport,
• une étape de commande du poste de transformation par un moyen de commande, par exemple un poste de commande,
• une étape d'enregistrement dans le moyen de commande d'un fichier numérique source FN1 représentatif du substrat,
• une étape d'enregistrement dans le moyen de commande d'un fichier numérique FN3 représentatif de la transformation par voie numérique à effectuer sur le substrat,
• une étape d'analyse du substrat au moyen d'un dispositif X pour lui attribuer des valeurs numériques, le dit dispositif X étant situé dans le dispositif de transformation,
• une étape d'enregistrement dans le moyen de commande d'un fichier numérique FN2 représentatif du substrat analysé au moyen du dispositif X et de l'acquisition de données numériques correspondantes,
**caractérisé en ce que** le procédé comprend :
• une étape de comparaison et d'enregistrement dans le moyen de commande des différences entre le fichier FN1 et le fichier FN2,
• une étape de correction, par un moyen de correction faisant partie du moyen de commande, du fichier FN3 par les différences entre le fichier FN1 et le fichier FN2, et
• une étape d'enregistrement dans le moyen de commande d'un fichier numérique FN3-CORR fourni par le moyen de correction du fichier FN3,
l'étape de transformation par voie numérique du substrat dans un poste de transformation constituant la dernière étape, la dite dernière étape étant commandée par le moyen de commande au moyen du fichier FN3-CORR, et une distance dE qui correspond à la distance entre le point du substrat qui subit au temps « t » la transformation dans le poste de transformation et le point amont de la zone d'analyse et d'acquisition au même temps « t » du dispositif X est supérieure à 1 mm.

2. Procédé selon la revendication précédente **caractérisé en ce que** la transformation est une impression et le poste de transformation est un poste d'impression.

3. Procédé selon l'une quelconque des revendications précédentes **caractérisé en ce qu'**il comprend une étape de découpage (maillage) par un moyen de découpage des fichiers FN1 et FN2.

4. Procédé selon la revendication précédente **caractérisé en ce que** le découpage s'effectue dans des bandes transversales successives du substrat.

5. Procédé selon la revendication précédente **caractérisé en ce que** les bandes sont de dimensions égales (ou supérieures) en longueur à la largeur du substrat et de largeur supérieure à 0,01 cm, à 0,05 cm, à 0,1 cm, à 0,5 cm, à 1 cm, voire même supérieure à 5 cm.

6. Procédé selon l'une quelconque des revendications 4 à 5 **caractérisé en ce que** les bandes sont de dimensions égales (ou supérieures) en longueur à la largeur du substrat et de largeur inférieure à 100 cm, à 60 cm, à 30 cm, voire même inférieure à 10 cm.

7. Procédé selon l'une quelconque des revendications 4 à 6 **caractérisé en ce que** la transformation des premières bandes du substrat commence alors qu'une partie du dit substrat n'a pas encore été analysée au moyen du dispositif X.

8. Procédé selon l'une quelconque des revendications précédentes **caractérisé en ce que** la distance dE qui correspond à la distance entre le point du substrat qui subit au temps « t » la transformation dans le poste de transformation et le point amont de la zone d'analyse et d'acquisition au même temps « t » du dispositif X est supérieure à 50 mm, par exemple supérieure à 100 mm, supérieure à 250 mm, ou encore supérieure à 300 mm.

9. Procédé selon l'une quelconque des revendications précédentes **caractérisé en ce que** la distance dE est inférieure à 100 m, inférieure à 50 m, ou encore inférieure à 20 m.

10. Procédé selon l'une quelconque des revendications précédentes **caractérisé en ce que** le poste de commande comprend une unité de calcul/traitement parallélisable qui sert de
- moyen de découpage des fichiers FN1 et FN2, et/ou de
- moyen de comparaison et d'enregistrement des différences entre le fichier FN1 et le fichier FN2, et/ou de
- moyen de correction du fichier FN3 par les différences entre le fichier FN1 et le fichier FN2.

11. Procédé selon l'une quelconque des revendications précédentes **caractérisé en ce que** le substrat est prétraité dans un dispositif de prétraitement sélectionné parmi une impression d'image et/ou de texte, un collage d'image et/ou de texte, un pelliculage, une prédécoupe, une perforation, et/ou deux ou plusieurs des dits prétraitements en combinaison.

12. Procédé selon l'une quelconque des revendications précédentes **caractérisé en ce que** le substrat ne comprend pas de marques de repérage à des endroits prédéterminés avant la transformation.

13. Procédé selon l'une quelconque des revendications précédentes **caractérisé en ce que** la vitesse relative du substrat (« v ») par rapport au poste de transformation est comprise entre 0,05 et 10 m/s, comprise entre 0,1 et 2 m/s, par exemple comprise entre 0,3 et 1,2 m/s.

14. Procédé selon l'une quelconque des revendications précédentes **caractérisé en ce que** la vitesse relative du substrat (« v ») par rapport au dispositif X est comprise entre 0,05 et 10 m/s, comprise entre 0,1 et 2 m/s, par exemple comprise entre 0,3 et 1,2 m/s.

15. Procédé selon l'une quelconque des revendications précédentes **caractérisé en ce que** les fichiers numériques FN1 et/ou FN2 sont traités avant ou pendant leur comparaison de manière à ce que leur résolution soit identique.

16. Procédé selon la revendication précédente **caractérisé en ce que** le fichier numérique FN3 est traité avant sa correction de manière à ce que sa résolution soit identique à celle des fichiers FN1 et FN2 traité(s).

## Patentansprüche

1. Verfahren zur Transformation in einer Vorrichtung zur digitalen Transformation eines Substrats, das umfasst:
• einen Schritt des digitalen Transformierens des Substrats in einer Transformationsstation der Vorrichtung zur Transformation, wobei das Substrat mithilfe einer Transportstation durch die Transformationsstation bewegt wird,
• einen Schritt des Steuerns der Transformationsstation durch ein Steuermittel, beispielsweise eine Steuerstation,
• einen Schritt des Speicherns einer digitalen Quelldatei FN1, die das Substrat repräsentiert, in dem Steuermittel,
• einen Schritt des Speicherns einer digitalen Datei FN3, die digitale Transformation repräsentiert, die auf dem Substrat vorzunehmen ist, in dem Steuermittel,
• einen Schritt des Analysierens des Substrats mit einer Vorrichtung X, um diesem digitale Werte zuzuordnen, wobei die Vorrichtung X in der Transformationsvorrichtung angeordnet ist,
• einen Schritt des Speicherns einer digitalen Datei FN2, die das mit der Vorrichtung X analysierte Substrat repräsentiert, in dem Steuermittel und des Erfassens entsprechender digitaler Daten,
**dadurch gekennzeichnet, dass** das Verfahren umfasst:
• einen Schritt des Vergleichens und des Speicherns von Unterschieden zwischen der Datei FN1 und der Datei FN2 in dem Steuermittel,
• einen Schritt des Korrigierens der Datei FN3 hinsichtlich der Unterschiede zwischen der Datei FN1 und der Datei FN2 durch ein Korrekturmittel, das einen Teil des Steuermittels bildet, und
• einen Schritt des Speicherns einer digitalen Datei FN3-CORR, die durch das Mittel zum Korrigieren der Datei FN3 geliefert wird, in dem Steuermittel,
wobei der Schritt des digitalen Transformierens des Substrats in einer Transformationsstation den letzten Schritt darstellt, wobei der letzte Schritt von dem Steuermittel mit der Datei FN3-CORR gesteuert wird und eine Distanz dE, die der Distanz zwischen dem Punkt des Substrats, der zur Zeit "t" dem Transformieren in der Transformationsstation ausgesetzt ist, und dem Punkt stromaufwärts von der Analyse- und Erfassungszone zur selben Zeit "t" der Vorrichtung X entspricht, größer als 1 mm ist.

2. Verfahren nach dem vorhergehenden Anspruch, **dadurch gekennzeichnet, dass** die Transformation ein Druck ist und die Transformationsstation eine Druckstation ist.

3. Verfahren nach einem der vorgehenden Ansprüche, **dadurch gekennzeichnet, dass** es einen Schritt des Zerlegens (Gitterbildung) durch ein Mittel zum Zerlegen der Dateien FN1 und FN2 umfasst.

4. Verfahren nach einem der vorgehenden Ansprüche, **dadurch gekennzeichnet, dass** das Zerlegen in aufeinanderfolgenden Querbanden des Substrats durchgeführt wird.

5. Verfahren nach einem der vorgehenden Ansprüche, **dadurch gekennzeichnet, dass** die Banden Abmessungen in der Länge gleich der (oder größer als die) Breite des Substrats und in der Breite von mehr als 0,01 cm, als 0,05 cm, als 0,1 cm, als 0,5 cm, als 1 cm, sogar mehr als 5 cm, aufweisen.

6. Verfahren nach einem der Ansprüche 4 bis 5, **dadurch gekennzeichnet, dass** die Banden Abmessungen in der Länge gleich der (oder größer als die) Breite des Substrats und in der Breite von weniger als 100 cm, als 60 cm, als 30 cm, sogar weniger als 10 cm, aufweisen.

7. Verfahren nach einem der Ansprüche 4 bis 6, **dadurch gekennzeichnet, dass** die Transformation der ersten Banden des Substrats beginnt, während ein Abschnitt des Substrats noch nicht mit der Vorrichtung X analysiert wurde.

8. Verfahren nach einem der vorhergehenden Ansprüche, **dadurch gekennzeichnet, dass** die Distanz dE, die der Distanz zwischen dem Punkt des Substrats, der zur Zeit "t" dem Transformieren in der Transformationsstation ausgesetzt ist, und dem Punkt stromaufwärts von der Analyse- und Erfassungszone zur selben Zeit "t" der Vorrichtung X entspricht, größer als 50 mm, beispielsweise größer als 100 mm, größer als 250 mm oder auch größer als 300 mm ist.

9. Verfahren nach einem der vorhergehenden Ansprüche, **dadurch gekennzeichnet, dass** die Distanz dE kleiner als 100 mm, kleiner als 50 mm oder auch kleiner als 20 mm ist.

10. Verfahren nach einem der vorhergehenden Ansprüche, **dadurch gekennzeichnet, dass** die Steuerstation eine parallelisierbare Berechnungs/Behandlungseinheit umfasst, die dient als
- Mittel zum Zerlegen der Dateien FN1 und FN2, und/oder als
- Mittel zum Vergleichen und Speichern der Unterschiede zwischen der Datei FN1 und der Datei FN2, und/oder als
- Mittel zum Korrigieren der Datei FN3 hinsichtlich der Unterschiede zwischen der Datei FN1 und der Datei FN2.

11. Verfahren nach einem der vorhergehenden Ansprüche, **dadurch gekennzeichnet, dass** das Substrat in einer Vorbehandlungsvorrichtung vorbehandelt wird, ausgewählt aus einem Bedrucken mit Bild und/oder Text, einer Kollage von Bild und/oder Text, einer Beschichtung, einem Vorschneiden, einer Perforation und/oder zwei oder mehreren dieser Vorbehandlungen in Kombination.

12. Verfahren nach einem der vorhergehenden Ansprüche, **dadurch gekennzeichnet, dass** das Substrat keine Registermarken an vorherbestimmten Orten vor dem Transformieren umfasst.

13. Verfahren nach einem der vorhergehenden Ansprüche, **dadurch gekennzeichnet, dass** die relative Geschwindigkeit des Substrats ("v") in Bezug auf die Transformationsstation zwischen 0,05 und 10 m/s, zwischen 0,1 und 2 m/s, beispielsweise zwischen 0,3 und 1,2 m/s, liegt.

14. Verfahren nach einem der vorhergehenden Ansprüche, **dadurch gekennzeichnet, dass** die relative Geschwindigkeit des Substrats ("v") in Bezug auf die Vorrichtung X zwischen 0,05 und 10 m/s, zwischen 0,1 und 2 m/s, beispielsweise zwischen 0,3 und 1,2 m/s, liegt.

15. Verfahren nach einem der vorhergehenden Ansprüche, **dadurch gekennzeichnet, dass** die digitalen Dateien FN1 und/oder FN2 vor oder während ihres Vergleichs behandelt werden, damit ihre Auflösung identisch ist.

16. Verfahren nach dem vorhergehenden Anspruch, **dadurch gekennzeichnet, dass** die digitale Datei FN3 vor ihrer Korrektur behandelt wird, damit ihre Auflösung identisch ist mit jener der behandelten Dateien FN1 und FN2.

## Claims

1. Method for converting in a converting device digitally a substrate comprising:
• a step of converting digitally the substrate in a converting station of the converting device, said substrate being moved through the converting station by means of a conveying unit;
• a step of controlling the converting station with a controlling means, a control unit for example;
• a step of recording in the controlling means a source digital file FN1 representative of the substrate;
• a step of recording in the controlling means a digital file FN3 representative of the digital conversion to be applied to the substrate;
• a step of analysing the substrate by means of a device X in order to attribute thereto digital values, said device X being located in the converting device;
• a step of recording in the controlling means a digital file FN2 representative of the substrate analysed by means of the device X and of acquiring corresponding digital data;
**characterized in that** the method comprises:
• a step of comparing and recording in the controlling means differences between the file FN1 and the file FN2;
• a step of correcting, by means of a correcting means forming part of the controlling means, the file FN3 with the differences between the file FN1 and the file FN2; and
• a step of recording in the controlling means a digital file FN3-CORR delivered by the means for correcting the file FN3,
the step of converting digitally the substrate in a converting station being the last step, said last step being controlled by the controlling means by means of the file FN3-CORR, and a distance dE that corresponds to the distance between the point of the substrate that is converted in the converting station at the time "t" and the upstream point of the acquisition and analysis zone, at the same time "t", of the device X is larger than 1 mm.

2. Method according to the preceding claim, **characterized in that** the conversion is printing and the converting station is a printing station.

3. Method according to any one of the preceding claims, **characterized in that** it comprises a step of splitting (mesh generation) with a splitting means the files FN1 and FN2.

4. Method according to the preceding claim, **characterized in that** the splitting is carried out in successive transverse strips of the substrate.

5. Method according to the preceding claim, **characterized in that** the strips are of dimensions equal (or larger) in length than the width of the substrate and of width larger than 0.01 cm, than 0.05 cm, than 0.1 cm, than 0.5 cm, than 1 cm, or even larger than 5 cm.

6. Method according to either one of Claims 4 to 5, **characterized in that** the strips are of dimensions equal (or larger) in length than the width of the substrate and of width smaller than 100 cm, than 60 cm, than 30 cm, or even smaller than 10 cm.

7. Method according to any one of Claims 4 to 6, **characterized in that** the conversion of the first strips of the substrate starts while a portion of said substrate has not yet been analysed by means of the device X.

8. Method according to any one of the preceding claims, **characterized in that** the distance dE that corresponds to the distance between the point of the substrate that is converted in the converting station at the time "t" and the upstream point of the acquisition and analysis zone, at the same time "t", of the device X is larger than 50 mm, and for example larger than 100 mm, larger than 250 mm, or even larger than 300 mm.

9. Method according to any one of the preceding claims, **characterized in that** the distance dE is smaller than 100 m, smaller than 50 m, or even smaller than 20 m.

10. Method according to any one of the preceding claims, **characterized in that** the controlling station comprises a parallelizable processing/computing unit that serves as:
- means for splitting the files FN1 and FN2, and/or as
- means for comparing and recording differences between the file FN1 and the file FN2, and/or as
- means for correcting the file FN3 with the differences between the file FN1 and the file FN2.

11. Method according to any one of the preceding claims, **characterized in that** the substrate is preprocessed in a preprocessing device that applies a preprocessing operation selected from a text- and/or image-printing operation, a text- and/or image-bonding operation, a film-coating operation, a precutting operation, a perforating operation, and/or two or more of said preprocessing operations in combination.

12. Method according to any one of the preceding claims, **characterized in that** the substrate does not comprise register marks in preset locations before the conversion.

13. Method according to any one of the preceding claims, **characterized in that** the relative speed ("v") of the substrate with respect to the converting station is comprised between 0.05 and 10 m/s, comprised between 0.1 and 2 m/s, and for example comprised between 0.3 and 1.2 m/s.

14. Method according to any one of the preceding claims, **characterized in that** the relative speed ("v") of the substrate with respect to the device X is comprised between 0.05 and 10 m/s, comprised between 0.1 and 2 m/s, and for example comprised between 0.3 and 1.2 m/s.

15. Method according to any one of the preceding claims, **characterized in that** the digital files FN1 and/or FN2 are processed before or during their comparison so that their resolution is identical.

16. Method according to the preceding claim, **characterized in that** the digital file FN3 is processed before its correction so that its resolution is identical to that of the processed files FN1 and FN2.
